(19) Europäisches Patentamt / European Patent Office / Office européen des brevets

(11) **EP 3 892 964 B1**

(12) **EUROPEAN PATENT SPECIFICATION**

(45) Date of publication and mention
of the grant of the patent:
**03.04.2024 Bulletin 2024/14**

(21) Application number: **18942448.4**

(22) Date of filing: **05.12.2018**

(51) International Patent Classification (IPC):
$F02M\ 26/47^{(2016.01)}$    $F02M\ 26/10^{(2016.01)}$
$F02M\ 26/05^{(2016.01)}$    $F02M\ 35/10^{(2006.01)}$
$G01F\ 1/44^{(2006.01)}$    $F02D\ 41/00^{(2006.01)}$

(52) Cooperative Patent Classification (CPC):
**F02M 26/05; F02M 26/10; F02M 26/47;
F02M 35/1038; G01F 1/44;** F02D 2041/0075;
F02D 2200/0402

(86) International application number:
**PCT/CN2018/119294**

(87) International publication number:
**WO 2020/113453 (11.06.2020 Gazette 2020/24)**

(54) **METHOD AND DEVICE FOR CALCULATING PRESSURE OF VENTURI TUBE**

VERFAHREN UND VORRICHTUNG ZUR BERECHNUNG EINES VENTURIROHRDRUCKS

PROCÉDÉ ET DISPOSITIF DE CALCUL DE PRESSION DE TUBE VENTURI

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**13.10.2021 Bulletin 2021/41**

(73) Proprietor: **Weichai Power Co., Ltd.
Weifang, Shandong 261061 (CN)**

(72) Inventors:
• **LUAN, Junshan
Weifang, Shandong 261061 (CN)**
• **ZHANG, Chen
Weifang, Shandong 261061 (CN)**
• **DAI, Ziyang
Weifang, Shandong 261061 (CN)**
• **YAO, Wang
Weifang, Shandong 261061 (CN)**

(74) Representative: **Ipside
6, Impasse Michel Labrousse
31100 Toulouse (FR)**

(56) References cited:
DE-A1-102016 219 781    US-A1- 2002 129 800
US-A1- 2004 084 031    US-A1- 2016 312 728

EP 3 892 964 B1

## Description

### FIELD

The present disclosure relates to the technical field of vehicles, and in particular to a method and a device for calculating pressure in a Venturi tube.

### BACKGROUND

At present, exhaust emissions of vehicles must meet the Euro 6 emission standards. In order to control engine emissions, it is necessary to accurately measure a flow rate of exhaust gas, which may be measured with Venturi technology.

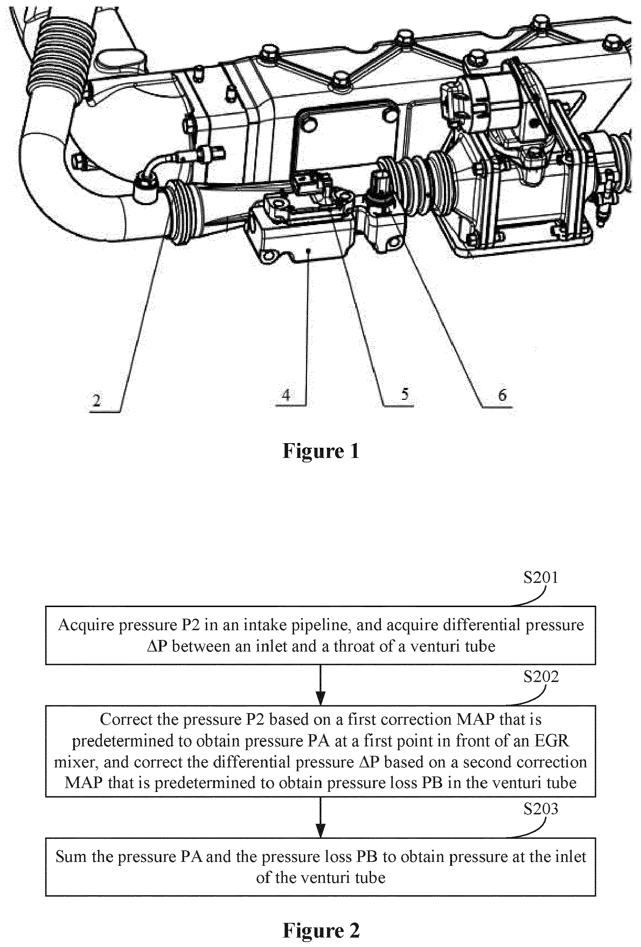

A Venturi tube is arranged in an exhaust gas recirculation pipeline (EGR pipeline) of an engine. Generally, three sensors are arranged on the Venturi tube in order to measure a flow rate of the exhaust gas in the EGR pipeline. As shown in Figure 1, the three sensors include a sensor 6 for measuring pressure at an inlet of the Venturi tube, a sensor 2 for measuring a temperature at the inlet of the Venturi tube, and a sensor 5 for measuring differential pressure between the inlet and a throat of the Venturi tube. The Venturi tube is further provided with a valve seat 4 for arranging these sensors.

The flow rate of the exhaust gas is calculated from the following equation (1).

$$Qm = \frac{C * \varepsilon}{\sqrt{1 - \beta^4}} * \frac{\pi * d^2}{4} * \sqrt{2 * \rho * \Delta P} \qquad (1)$$

where Qm represents the calculated flow rate of the exhaust gas; P represents a density of the exhaust gas at the inlet of the Venturi tube, which is acquired based on a temperature signal and a pressure signal at the inlet of the Venturi tube, that is, based on a measurement result of the sensor 2 and a measurement result of the sensor 6; $\Delta P$ represents a differential pressure signal between the inlet and the throat of the Venturi tube, that is, $\Delta P$ is determined based on a measurement result of the sensor 5; and other parameters are all standard quantities.

It can be seen from the above equation that the measurement results of the sensor 2, the sensor 5 and the sensor 6 are required in order to calculate the flow rate of the exhaust gas. However, it is difficult to arrange the three sensors due to small space available for arranging sensors on the Venturi tube.

US 2016/0312728A1 discloses a system and a method for determining an engine mass air flow (MAP) for use in an engine air to fuel ratio (AFR) calculation to operate an engine, which includes: monitoring engine operation, determining in the electronic controller a first estimation of engine MAP based on a regression model, determining in the electronic controller a second estimation of engine MAP based on a flow model, and selecting the first or second estimation of engine MAP based on an operating state of the engine. Each estimation can use various engine parameters interchangeably to provide a robust system against sensor failures.

US 2002/0129800 A1 discloses an exhaust gas recirculation system that directs exhaust gasses from an exhaust manifold to an intake manifold of an internal combustion engine. The exhaust gasses travel from the exhaust manifold, first passing through a flow control valve and then through a measuring orifice before entering the intake manifold. Pressure upstream of the orifice is used, along with correction pressure downstream of the orifice, to measure and control exhaust gas flow. Further, manifold pressure is determined from downstream pressure and the used along with the measured exhaust gas flow to calculated a cylinder air charge amount.

Therefore, a technical solution is desired to solve the above problem.

### SUMMARY

The technical problem to be solved in the present disclosure is to calculate a flow rate of exhaust gas, which requires measurement results of three sensors. However, it is difficult to arrange the three sensors due to small space available for arranging the three sensors on the Venturi tube. Therefore, a method and a device for calculating pressure in a Venturi tube are provided.

In a first aspect, a method for calculating pressure in a Venturi tube is provided according to an embodiment of the present disclosure. The method includes: acquiring pressure P2 in an intake pipeline of an engine, and acquiring differential pressure $\Delta P$ between an inlet and a throat of the Venturi tube, where the Venturi tube is arranged between the intake pipe and an exhaust pipe of the engine; correcting the pressure P2 based on a predetermined first correction MAP to obtain pressure $P_A$ at a first point in front of an exhaust gas recirculation EGR mixer, and correcting the differential pressure ΔP based on a predetermined second correction MAP to obtain pressure loss $P_B$ in the Venturi tube, where the first point is arranged at an outlet of the Venturi tube; and calculating a sum of the pressure $P_A$ and the pressure loss $P_B$ to obtain pressure at the inlet of the Venturi tube.

In an embodiment, the acquiring pressure P2 in an intake pipeline includes acquiring the pressure P2 by an intake pressure sensor of the engine.

In an embodiment, the first correction MAP is determined from calibration based on a rotational speed and a fuel volume of the engine.

In an embodiment, the second correction MAP is determined from calibration based on a rotational speed and an exhaust gas flow rate of the engine.

In an embodiment, the method further includes: acquiring a temperature at the inlet of the Venturi tube; and calculating a flow rate of the exhaust gas of the engine based on the temperature at the inlet of the Venturi tube, the pressure at the inlet of the Venturi tube and the differential pressure ΔP.

In a second aspect, a device for calculating pressure in a Venturi tube is provided according to an embodiment of the present disclosure. The device includes a first acquisition unit, a correction unit, and a summation unit. The first acquisition unit is configured to acquire pressure P2 in an intake pipeline of an engine, and acquire differential pressure ΔP between an inlet and a throat of the Venturi tube. The Venturi tube is arranged between the intake pipe and an exhaust pipe of the engine. The correction unit is configured to correct the pressure P2 based on a predetermined first correction MAP to obtain pressure $P_A$ at a first point in front of an exhaust gas recirculation EGR mixer, and correct the differential pressure ΔP based on a predetermined second correction MAP to obtain pressure loss $P_B$ in the Venturi tube. The first point is arranged at an outlet of the Venturi tube. The summation unit is configured to calculate a sum of the pressure $P_A$ and the pressure loss $P_B$ to obtain pressure at the inlet of the Venturi tube.

In an embodiment, the pressure P2 in the intake pipeline is acquired by an intake pressure sensor of the engine.

In an embodiment, the first correction MAP is determined from calibration based on a rotational speed and a fuel volume of the engine.

In an embodiment, the second correction MAP is determined from calibration based on a rotational speed and an exhaust gas flow rate of the engine.

In an embodiment, the device further includes a second acquisition unit and a calculation unit. The second acquisition unit is configured to acquire a temperature at the inlet of the Venturi tube. The calculation unit is configured to calculate the flow rate of the exhaust gas of the engine based on the temperature at the inlet of the Venturi tube, the pressure at the inlet of the Venturi tube and the differential pressure ΔP.

Compared with the conventional technology, the embodiments of the present disclosure have the following advantages. A method and a device for calculating pressure in a Venturi tube are provided according to embodiments of the present disclosure. Specifically, pressure P2 in an intake pipeline is acquired. Differential pressure ΔP between an inlet and a throat of the Venturi tube is acquired. The pressure P2 is corrected based on a predetermined first correction MAP to obtain pressure $P_A$ at a first point in front of an EGR mixer. The differential pressure ΔP is corrected based on a predetermined second correction MAP to obtain pressure loss $P_B$ in the Venturi tube. A sum of the pressure $P_A$ and the pressure loss $P_B$ is calculated to obtain pressure at the inlet of the Venturi tube. It can be seen that with the method according to the embodiment of the present disclosure, the pressure at the inlet of the Venturi tube is acquired from calculation. That is, the pressure at the inlet of the Venturi tube is calculated instead of measured by a sensor. In this way, it is unnecessary to arrange a sensor for measuring the pressure at the inlet of the Venturi tube. A flow rate of exhaust gas is calculated while reducing the number of sensors arranged on the Venturi tube.

**BRIEF DESCRIPTION OF THE DRAWINGS**

Various other advantages and benefits will become clear to those skilled in the art from the detailed description of the preferred embodiments below. The drawings are only for the purpose of illustrating the preferred embodiments, and are not considered as a limitation to the present disclosure. In all the drawings, the same reference symbols are used to denote the same components. In the drawings:

Figure 1 is a schematic diagram showing a Venturi tube with sensors according to an embodiment of the present disclosure;
Figure 2 is a flowchart of a method for calculating pressure in a Venturi tube according to an embodiment of the present disclosure;
Figure 3 is a schematic diagram showing connection of an intake pipeline of an engine and a Venturi tube according to an embodiment of the present disclosure; and
Figure 4 is a schematic structural diagram of a device for calculating pressure in a Venturi tube according to an embodiment of the present disclosure.

**DETAILED DESCRIPTION OF EMBODIMENTS**

The technical solutions in the embodiments of the present disclosure are described clearly and completely in conjunction with the drawings in the embodiments of the present disclosure hereinafter, so that those skilled in the art can understand the technical solutions of the present disclosure better. It is apparent that the described embodiments are only some rather than all embodiments of the present disclosure.

Terms "first", "second", "third", "fourth" and the like (if any) in the specification and claims of the present disclosure and the above drawings are used to distinguish similar objects, and are not necessarily used to describe a specific order or sequence. It should be understood that data described in this way may be interchanged under appropriate circumstances, so that the embodiments described herein can be implemented in an order other than that illustrated or described herein. In addition, terms "including" and "comprising" and any variations thereof are intended to be non-exclusive. For example, a process, method, system, product, or device that includes a series of steps or units is not necessarily limited to those clearly listed, but may include other steps or units that are not clearly listed or are inherent to the process, method, product, or device.

It is found from research that measurement results of the sensor 2, the sensor 5 and the sensor 6 shown in Figure 1 are required in order to calculate a flow rate of exhaust gas. However, it is extremely difficult to arrange the three sensors due to small space available for arranging the three sensors on the Venturi tube.

In view of this, a method and a device for calculating pressure in a Venturi tube are provided according to embodiments of the present disclosure. Specifically, pressure P2 in an intake pipeline is acquired. Differential pressure $\Delta P$ between an inlet and a throat of the Venturi tube is acquired. The pressure P2 is corrected based on a predetermined first correction MAP to obtain pressure $P_A$ at a first point in front of an EGR mixer. The differential pressure $\Delta P$ is corrected based on a predetermined second correction MAP to obtain pressure loss $P_B$ in the Venturi tube. A sum of the pressure $P_A$ and the pressure loss $P_B$ is calculated to obtain pressure at the inlet of the Venturi tube. It can be seen that with the method according to the embodiment of the present disclosure, the pressure at the inlet of the Venturi tube is acquired from calculation. That is, the pressure at the inlet of the Venturi tube is calculated instead of measured by a sensor. In this way, it is unnecessary to arrange a sensor for measuring the pressure at the inlet of the Venturi tube. A flow rate of exhaust gas is calculated while reducing the number of sensors arranged on the Venturi tube.

Hereinafter, illustrative embodiments of the present disclosure are described in more detail with reference to the drawings. Although the drawings show illustrative embodiments of the present disclosure, it should be understood that the present disclosure may be implemented in various forms and should not be limited by the embodiments set forth herein. Instead, these embodiments are provided to make a more thorough understanding of the present disclosure and to fully convey the scope of the present disclosure to those skilled in the art.

Method Embodiment

Reference is made to Figure 2, which is a flowchart of a method for calculating pressure in a Venturi tube according to an embodiment of the present disclosure.

The method according to the embodiment of the present disclosure may be implemented by a processor such as an electronic control unit (ECU) in a vehicle.

The method according to the embodiment of the present disclosure includes the following steps S201 to S203.

In S201, pressure P2 in an intake pipeline is acquired, and differential pressure $\Delta P$ between an inlet and a throat of the Venturi tube is acquired.

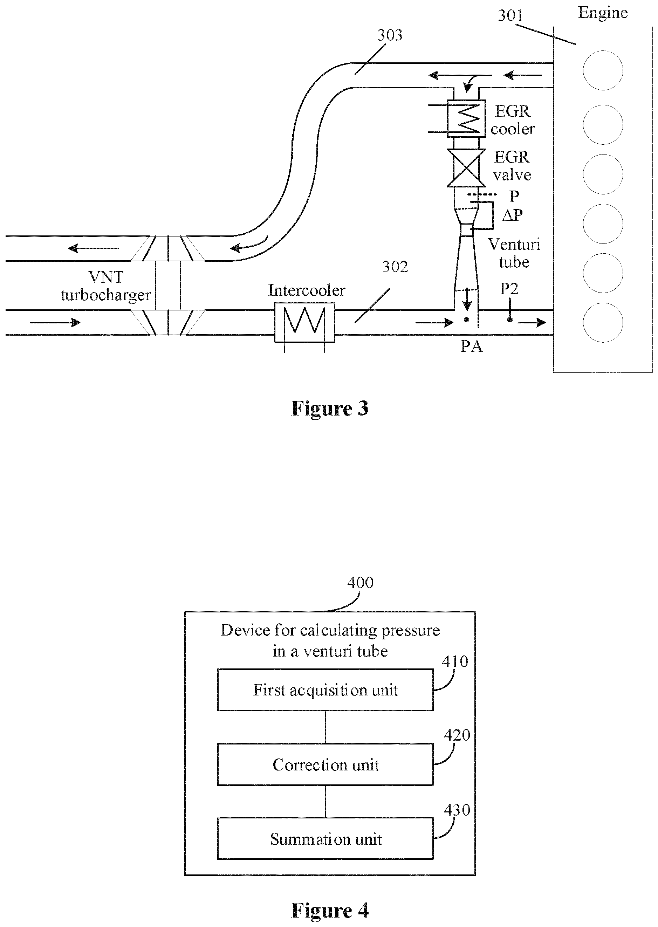

It can be understood in conjunction with Figure 3, which is a schematic diagram showing connection of an intake pipeline of an engine and a Venturi tube according to an embodiment of the disclosure.

In Figure 3, a reference number 301 represents an engine, a reference number 302 represents an intake pipeline of the engine, and a reference number 303 represents an exhaust pipeline of the engine. A Venturi tube, an exhaust gas recirculation (EGR) cooler and an EGR valve are connected between the intake pipeline 302 and the exhaust pipeline 303.

Generally, an engine includes a built-in intake pressure sensor. Therefore, in an implementation of the embodiment of the present disclosure, the pressure in the intake pipeline of the engine is acquired by the built-in intake pressure sensor of the engine.

In the embodiment of the present disclosure, as mentioned above, a differential pressure sensor is arranged on the Venturi tube to measure the differential pressure between the inlet and the throat of the Venturi tube. Therefore, in the embodiment of the present disclosure, the differential pressure $\Delta P$ is acquired by the differential pressure sensor (that is, the sensor 5 in Figure 1).

In S202, the pressure P2 is corrected based on a predetermined first correction MAP to obtain pressure $P_A$ at a first point in front of an EGR mixer, and the differential pressure $\Delta P$ is corrected based on a predetermined second correction MAP to obtain pressure loss $P_B$ in the Venturi tube.

It should be noted that the first point mentioned in the embodiment of the present disclosure refers to a point in front of the EGR mixer (not shown in Figure 2). The first point may be, for example, a point A shown in Figure 3.

In the embodiment of the present disclosure, the first correction MAP is determined from calibration based on a rotational speed and a fuel volume of the engine. An implementation of calibrating the first correction MAP is not limited in the embodiment of the present disclosure. In an example, a pressure sensor is arranged at the point A, and the first correction MAP is calibrated based on pressure measured by the pressure sensor arranged at the point A and the pressure measured by the built-in intake pressure sensor of the engine.

It is understandable that the pressure of the exhaust gas decreases after flowing through the throat of the Venturi tube and recovers after flowing through a divergent section of the Venturi tube, and there is pressure loss throughout the process. In the embodiment of the present disclosure, $P_B$ represents the pressure loss of the exhaust gas when flowing from the throat of the Venturi tube to the divergent section of the Venturi tube.

In the embodiment of the present disclosure, the second correction MAP is determined from calibration based on the rotational speed and an EGR exhaust gas flow rate of the engine. An implementation of calibrating the second correction MAP is not limited in the embodiment of the present disclosure, and may be determined according to actual conditions.

It should be noted that the pressure loss $P_B$ of the Venturi tube depends on the Venturi tube itself. That is, the Venturi tube corresponds to a second correction MAP for calculating the pressure loss of the Venturi tube.

In S203, A sum of the pressure $P_A$ and the pressure loss $P_B$ is calculated to obtain pressure at the inlet of the Venturi tube.

In an example of the embodiment of the present disclosure, a temperature at the inlet of the Venturi tube is acquired, and the flow rate of the exhaust gas of the engine is calculated based on the temperature at the inlet of the Venturi tube, the pressure in the Venturi tube and the differential pressure $\Delta P$. The temperature at the inlet of the Venturi tube is acquired by an inlet temperature sensor (that is, the sensor 2 shown in Figure 1), and the flow rate of the exhaust gas of the engine is calculated from the equation (1).

It can be seen from the above that with the method for calculating pressure in a Venturi tube according to the embodiment of the present disclosure, the pressure P2 in the intake pipeline is acquired. The differential pressure $\Delta P$ between the inlet and the throat of the Venturi tube is acquired. The pressure P2 is corrected based on the predetermined first correction MAP to obtain the pressure $P_A$ at the first point in front of the EGR mixer. The differential pressure $\Delta P$ is corrected based on the predetermined second correction MAP to obtain the pressure loss $P_B$ in the Venturi tube. A sum of the pressure $P_A$ and the pressure loss $P_B$ is calculated to obtain the pressure at the inlet of the Venturi tube. It can be seen that with the method according to the embodiment of the present disclosure, the pressure at the inlet of the Venturi tube is acquired from calculation. That is, the pressure at the inlet of the Venturi tube is calculated instead of measured by a sensor. In this way, it is unnecessary to arrange a sensor for measuring the pressure at the inlet of the Venturi tube. The flow rate of exhaust gas is calculated while reducing the number of sensors arranged on the Venturi tube.

Device Embodiment

Based on the method according to the above method embodiment, a device for calculating pressure in a Venturi tube is further provided according to an embodiment of the present disclosure.

Reference is made to Figure 4, which is a schematic structural diagram of a device for calculating pressure in a Venturi tube according to an embodiment of the disclosure.

A device 400 for calculating pressure in a Venturi tube according to the embodiment of the disclosure includes a first acquisition unit 410, a correction unit 420, and a summation unit 430.

The first acquisition unit 410 is configured to acquire pressure P2 in an intake pipeline, and acquire differential pressure $\Delta P$ between an inlet and a throat of the Venturi tube.

The correction unit 420 is configured to correct the pressure P2 based on a predetermined first correction MAP to obtain pressure $P_A$ at a first point in front of an exhaust gas recirculation EGR mixer, and correct the differential pressure $\Delta P$ based on a predetermined second correction MAP to obtain pressure loss $P_B$ in the Venturi tube.

The summation unit 430 is configured to calculate a sum of the pressure $P_A$ and the pressure loss $P_B$ to obtain pressure at the inlet of the Venturi tube.

In an embodiment, the pressure P2 in the intake pipeline is acquired by an intake pressure sensor of an engine.

In an embodiment, the first correction MAP is determined from calibration based on a rotational speed and a fuel volume of the engine.

In an embodiment, the second correction MAP is determined from calibration based on the rotational speed and an exhaust gas flow rate of the engine.

In an embodiment, the device 400 further includes a second acquisition unit and a calculation unit. The second acquisition unit is configured to acquire a temperature at the inlet of the Venturi tube. The calculation unit is configured to calculate a flow rate of the exhaust gas of the engine based on the temperature at the inlet of the Venturi tube, the pressure in the Venturi tube and the differential pressure ΔP.

Since the device 400 corresponds to the method according to the above method embodiment, implementations of units of the device 400 are based on the same idea as the above method embodiment. Therefore, for the implementations of these units of the device 400, reference may be made to the description of the above method embodiment, which are not described in detail here.

It can be seen from the above that with the device for calculating pressure in a Venturi tube according to the embodiment of the present disclosure, the pressure P2 in the intake pipeline is acquired. The differential pressure ΔP between the inlet and the throat of the Venturi tube is acquired. The pressure P2 is corrected based on the predetermined first correction MAP to obtain the pressure $P_A$ at the first point in front of the EGR mixer. The differential pressure ΔP is corrected based on the predetermined second correction MAP to obtain the pressure loss $P_B$ in the Venturi tube. A sum of the pressure $P_A$ and the pressure loss $P_B$ is calculated to obtain the pressure at the inlet of the Venturi tube. It can be seen that with the device according to the embodiment of the present disclosure, the pressure at the inlet of the Venturi tube is acquired from calculation. That is, the pressure at the inlet of the Venturi tube is calculated instead of measured by a sensor. In this way, it is unnecessary to arrange a sensor for measuring the pressure at the inlet of the Venturi tube. The flow rate of the exhaust gas is calculated while reducing the number of sensors arranged on the Venturi tube.

Those skilled in the art can easily think of other embodiments of the present disclosure after considering the specification and practicing the technical solutions disclosed herein.

The description and the embodiments are to be regarded as illustrative only, and the true scope of the present disclosure is defined by the following claims.

It should be understood that the present disclosure is not limited to the precise structure that has been described above and shown in the drawings, and various modifications and changes can be made without departing from the scope of the present disclosure. The scope of the present disclosure is only limited by the appended claims.

**Claims**

1. A method for calculating pressure in a Venturi tube, comprising:

   acquiring pressure P2 in an intake pipeline (302) of an engine (301), and acquiring differential pressure ΔP between an inlet and a throat of the Venturi tube, wherein the Venturi tube is arranged between the intake pipe (302) and an exhaust pipe (303) of the engine (301);
   correcting the pressure P2 based on a predetermined first correction MAP to obtain pressure $P_A$ at a first point (A) in front of an exhaust gas recirculation EGR mixer, and correcting the differential pressure ΔP based on a predetermined second correction MAP to obtain pressure loss $P_B$ in the Venturi tube, wherein the first point (A) is arranged at an outlet of the Venturi tube; and
   calculating a sum of the pressure $P_A$ and the pressure loss $P_B$ to obtain pressure at the inlet of the Venturi tube.

2. The method according to claim 1, wherein the acquiring pressure P2 in an intake pipeline (302) comprises acquiring the pressure P2 by an intake pressure sensor of the engine (301).

3. The method according to claim 1, wherein the first correction MAP is determined from calibration based on a rotational speed and a fuel volume of the engine (301).

4. The method according to claim 1, wherein the second correction MAP is determined from calibration based on a rotational speed and an exhaust gas flow rate of the engine (301).

5. The method according to any one of claims 1 to 4, further comprising:

   acquiring a temperature at the inlet of the Venturi tube; and
   calculating a flow rate of exhaust gas of the engine (301) based on the temperature at the inlet of the Venturi tube, the pressure at the inlet of the Venturi tube and the differential pressure ΔP.

6. A device (400) for calculating pressure in a Venturi tube, comprising:

   a first acquisition unit (410)
   configured to acquire pressure P2 in an intake pipeline (302) of an engine (301), and acquire differential pressure ΔP between an inlet and a throat of the Venturi tube, wherein the Venturi tube is arranged between the intake pipe (302) and an exhaust pipe (303) of the engine (301);

a correction unit (420)

configured to correct the pressure P2 based on a predetermined first correction MAP to obtain pressure $P_A$ at a first point (A) in front of an exhaust gas recirculation EGR mixer, and correct the differential pressure $\Delta P$ based on a predetermined second correction MAP to obtain pressure loss $P_B$ in the Venturi tube, wherein the first point (A) is arranged at an outlet of the Venturi tube; and

a summation unit (430)

configured to calculate a sum of the pressure $P_A$ and the pressure loss $P_B$ to obtain pressure at the inlet of the Venturi tube.

7. The device according to claim 6, wherein the pressure P2 in the intake pipeline (302) is acquired by an intake pressure sensor of the engine (301).

8. The device according to claim 6, wherein the first correction MAP is determined from calibration based on a rotational speed and a fuel volume of the engine (301).

9. The device according to claim 6, wherein the second correction MAP is determined from calibration based on a rotational speed and an exhaust gas flow rate of the engine (301).

10. The device according to any one of claims 6 to 9, further comprising:

a second acquisition unit configured to acquire a temperature at the inlet of the Venturi tube; and

a calculation unit configured to calculate a flow rate of exhaust gas of the engine (301) based on the temperature at the inlet of the Venturi tube, the pressure at the inlet of the Venturi tube and the differential pressure $\Delta P$.

**Patentansprüche**

1. Verfahren zum Berechnen von Druck in einem Venturi-Rohr, umfassend:

Erfassen von Druck P2 in einer Zufuhrrohrleitung (302) eines Motors (301), und Erfassen von Druckunterschied $\Delta P$ zwischen einem Einlass und einer Verengung des Venturi-Rohres, wobei das Venturi-Rohr zwischen der Zufuhrrohrleitung (302) und einer Abgasrohrleitung (303) des Motors (301) angeordnet ist;

Korrigieren des Drucks P2 basierend auf einem vorbestimmten ersten Korrekturkennfeld (MAP), um einen Druck $P_A$ an einer ersten Stelle (A) vor einem Abgasrückführungs-, EGR-Mischer zu erhalten, und Korrigieren des Druckunterschieds $\Delta P$ basierend auf einem vorbestimmten zweiten Korrekturkennfeld (MAP), um einen Druckverlust $P_B$ in dem Venturi-Rohr zu erhalten, wobei die erste Stelle (A) an einem Auslass des Venturi-Rohres angeordnet ist; und

Berechnen einer Summe des Drucks $P_A$ und des Druckverlustes $P_B$, um einen Druck am Einlass des Venturi-Rohres zu erhalten.

2. Verfahren nach Anspruch 1, wobei das Erfassen von Druck P2 in einer Zufuhrrohrleitung (302) das Erfassen des Drucks P2 durch einen Zufuhrdrucksensor des Motors (301) umfasst.

3. Verfahren nach Anspruch 1, wobei das erste Korrekturkennfeld (MAP) aus einer Kalibrierung basierend auf einer Drehzahl und einem Kraftstoffvolumen des Motors (301) bestimmt wird.

4. Verfahren nach Anspruch 1, wobei das zweite Korrekturkennfeld (MAP) aus einer Kalibrierung basierend auf einer Drehzahl und einer Abgasflussrate des Motors (301) bestimmt wird.

5. Verfahren nach einem der Ansprüche 1 bis 4, weiter umfassend:

Erfassen einer Temperatur am Einlass des Venturi-Rohres; und

Berechnen einer Flussrate von Abgas des Motors (301) basierend auf der Temperatur am Einlass des Venturi-Rohres, dem Druck am Einlass des Venturi-Rohres und dem Druckunterschied $\Delta P$.

6. Vorrichtung (400) zum Berechnen von Druck in einem Venturi-Rohr, umfassend:

eine erste Erfassungseinheit (410), die konfiguriert ist, um Druck P2 in einer Zufuhrrohrleitung (302) eines Motors (301) zu erfassen, und um einen Druckunterschied $\Delta P$ zwischen einem Einlass und einer Verengung des Venturi-Rohres zu erfassen, wobei das Venturi-Rohr zwischen der Zufuhrrohrleitung (302) und einer Abgasrohrleitung (303) des Motors (301) angeordnet ist;

eine Korrektureinheit (420), die konfiguriert ist, um den Druck P2 basierend auf einem vorbestimmten ersten Korrekturkennfeld (MAP) zu korrigieren, um einen Druck $P_A$ an einer ersten Stelle (A) vor einem Abgasrückführungs-, EGR-Mischer zu erhalten, und um den Druckunterschied $\Delta P$ basierend auf einem vorbestimmten zweiten Korrekturkennfeld (MAP) zu korrigieren, um einen Druckverlust $P_B$ in dem Venturi-Rohr zu erhalten, wobei die erste Stelle (A) an einem Auslass des Venturi-Rohres angeordnet ist; und

eine Summierungseinheit (430), die konfiguriert ist, um eine Summe des Drucks $P_A$ und des Druckverlustes $P_B$ zu berechnen, um Druck am Einlass des Venturi-Rohres zu erhalten.

7. Vorrichtung nach Anspruch 6, wobei der Druck P2 in der Zufuhrrohrleitung (302) durch einen Zufuhrdrucksensor des Motors (301) erfasst wird.

8. Vorrichtung nach Anspruch 6, wobei das erste Korrekturkennfeld (MAP) aus einer Kalibrierung basierend auf einer Drehzahl und einem Kraftstoffvolumen des Motors (301) bestimmt wird.

9. Vorrichtung nach Anspruch 6, wobei das zweite Korrekturkennfeld (MAP) aus einer Kalibrierung basierend auf einer Drehzahl und einer Abgasflussrate des Motors (301) bestimmt wird.

10. Vorrichtung nach einem der Ansprüche 6 bis 9, weiter umfassend:

eine zweite Erfassungseinheit, die konfiguriert ist, um eine Temperatur am Einlass des Venturi-Rohres zu erfassen; und

eine Berechnungseinheit, die konfiguriert ist, um eine Flussrate von Abgas des Motors (301) basierend auf der Temperatur am Einlass des Venturi-Rohres, dem Druck am Einlass des Venturi-Rohres und dem Druckunterschied $\Delta P$ zu berechnen.

## Revendications

1. Procédé pour calculer une pression dans un tube de Venturi, comprenant :

l'acquisition d'une pression P2 dans une canalisation d'admission (302) d'un moteur (301), et l'acquisition d'une pression différentielle $\Delta P$ entre une entrée et une gorge du tube de Venturi, dans lequel le tube de Venturi est agencé entre le tuyau d'admission (302) et un tuyau d'échappement (303) du moteur (301) ;

la correction de la pression P2 sur la base d'une première correction MAP prédéterminée pour obtenir une pression $P_A$ au niveau d'un premier point (A) devant un mélangeur de recirculation des gaz d'échappement EGR, et la correction de la pression différentielle $\Delta P$ sur la base d'une deuxième correction MAP prédéterminée pour obtenir une perte de pression $P_B$ dans le tube de Venturi, dans lequel le premier point (A) est agencé au niveau d'une sortie du tube de Venturi ; et

le calcul d'une somme de la pression $P_A$ et de la perte de pression $P_B$ pour obtenir une pression au niveau de l'entrée du tube de Venturi.

2. Procédé selon la revendication 1, dans lequel la pression d'acquisition P2 dans une canalisation d'admission (302) comprend l'acquisition de la pression P2 par un capteur de pression d'admission du moteur (301).

3. Procédé selon la revendication 1, dans lequel la première correction MAP est déterminée à partir d'un étalonnage basé sur une vitesse de rotation et un volume de carburant du moteur (301).

4. Procédé selon la revendication 1, dans lequel la deuxième correction MAP est déterminée à partir d'un étalonnage basé sur une vitesse de rotation et un débit de gaz d'échappement du moteur (301).

5. Procédé selon l'une quelconque des revendications 1 à 4, comprenant en outre :

l'acquisition d'une température au niveau de l'entrée du tube de Venturi ; et

le calcul d'un débit de gaz d'échappement du moteur (301) sur la base de la température au niveau de l'entrée du tube de Venturi, de la pression au niveau de l'entrée du tube de Venturi et de la pression différentielle ΔP.

6. Dispositif (400) pour calculer une pression dans un tube de Venturi, comprenant :

une première unité d'acquisition (410) configurée pour acquérir une pression P2 dans une canalisation d'admission (302) d'un moteur (301), et acquérir une pression différentielle $\Delta_P$ entre une entrée et une gorge du tube de Venturi, dans lequel le tube de Venturi est agencé entre le tuyau d'admission (302) et un tuyau d'échappement (303) du moteur (301) ;
une unité de correction (420) configurée pour corriger la pression P2 sur la base d'une première correction MAP prédéterminée pour obtenir une pression $P_A$ au niveau d'un premier point (A) devant un mélangeur de recirculation des gaz d'échappement EGR, et corriger la pression différentielle $\Delta_P$ sur la base d'une deuxième correction MAP prédéterminée pour obtenir une perte de pression $P_B$ dans le tube de Venturi, dans lequel le premier point (A) est agencé au niveau d'une sortie du tube de Venturi ; et
une unité d'addition (430) configurée pour calculer une somme de la pression $P_A$ et de la perte de pression $P_B$ pour obtenir la pression au niveau de l'entrée du tube de Venturi.

7. Dispositif selon la revendication 6, dans lequel la pression P2 dans la canalisation d'admission (302) est acquise par un capteur de pression d'admission du moteur (301) .

8. Dispositif selon la revendication 6, dans lequel la première correction MAP est déterminée à partir d'un étalonnage basé sur une vitesse de rotation et un volume de carburant du moteur (301).

9. Dispositif selon la revendication 6, dans lequel la deuxième correction MAP est déterminée à partir d'un étalonnage basé sur une vitesse de rotation et un débit de gaz d'échappement du moteur (301).

10. Dispositif selon l'une quelconque des revendications 6 à 9, comprenant en outre :

une deuxième unité d'acquisition configurée pour acquérir une température au niveau de l'entrée du tube de Venturi ; et
une unité de calcul configurée pour calculer un débit de gaz d'échappement du moteur (301) sur la base de la température au niveau de l'entrée du tube de Venturi, de la pression au niveau de l'entrée du tube de Venturi et de la pression différentielle ΔP.

**Figure 1**

S201

Acquire pressure P2 in an intake pipeline, and acquire differential pressure ΔP between an inlet and a throat of a venturi tube

S202

Correct the pressure P2 based on a first correction MAP that is predetermined to obtain pressure PA at a first point in front of an EGR mixer, and correct the differential pressure ΔP based on a second correction MAP that is predetermined to obtain pressure loss PB in the venturi tube

S203

Sum the pressure PA and the pressure loss PB to obtain pressure at the inlet of the venturi tube

**Figure 2**

**Figure 3**

**Figure 4**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20160312728 A1

- US 20020129800 A1